Europäisches Patentamt

European Patent Office

Office européen des brevets

(11) Veröffentlichungsnummer: **0 315 794**

**A2**

## (12) EUROPÄISCHE PATENTANMELDUNG

(21) Anmeldenummer: 88117203.5

(22) Anmeldetag: 15.10.88

(51) Int. Cl.4: **F02D 11/10 , B60K 28/16**

(30) Priorität: 12.11.87 DE 3738415
30.04.88 DE 3814702

(43) Veröffentlichungstag der Anmeldung:
17.05.89 Patentblatt 89/20

(84) Benannte Vertragsstaaten:
DE FR GB IT SE

(71) Anmelder: **ROBERT BOSCH GMBH**
**Postfach 10 60 50**
**D-7000 Stuttgart 10(DE)**

(72) Erfinder: **Peter, Cornelius, Dipl.-Ing.**
**Burg Windeck Strasse 35**
**D-7583 Ottersweiher(DE)**
Erfinder: **Ursel, Eckhard**
**Lessingstrasse 21**
**D-7580 Buehl(DE)**
Erfinder: **Schaper, Uwe**
**Am Eisweier 4**
**D-7580 Buehl-Vimbuch(DE)**

(54) **Vorrichtung zum Betätigen der Drosselklappe einer Brennkraftmaschine insbesondere eines Kraftfahrzeuges.**

(57) Es wird eine Vorrichtung vorgeschlagen, die zum Betätigen der Drosselklappe (30) einer Brennkraftmaschine eines Kraftfahrzeugs dient. Die Betätigungsvorrichtung (18) umfaßt einen reversiblen elektrischen Antriebsmotor (32), dessen Abtriebswelle (36) mit der über eine Drosselklappenwelle (34) schwenkbaren Drosselklappe (30) wirkverbunden ist, wobei die Sollschwenkstellung der Drosselklappe (30) mittels eines Fahrhebels vorgebbar ist. Ein einfacher, kostengünstiger Aufbau einer solchen Betätigungsvorrichtung (18) wird dadurch erreicht, daß die Drosselklappe (30) drehfest mit einem Anschlag (80) gekoppelt ist, dem ein beweglicher, in Schließrichtung der Drosselklappe (30) durch eine Rückstellfeder (68,70) federbelasteter Gegenanschlag (78) zugeordnet ist. Der Gegenanschlag (78) ist mit dem Fahrhebel derart gekuppelt, daß er von Fahrhebel gegen die Kraft der Rückstellfeder (68,70) bewegt wird

FIG.2

## Vorrichtung zum Betätigen der Drosselklappe einer Brennkraftmaschine insbesondere eines Kraftfahrzeuges

Stand der Technik

Die Erfindung geht aus von einer Betätigungsvorrichtung nach der Gattung des Hauptanspruchs. Derartige Vorrichtungen dienen zur selbsttätigen Optimierung beispielsweise der Beschleunigung des Kraftfahrzeugs auch auf problematischen Fahrbahnoberflächen, weil der Rechner u.a. auch Signale von Sensoren erhält, welche den momentanen Schlupf zwischen den Antriebsrädern und der Fahrbahn erfassen. Wenn dieser Schlupf zu groß wird, veranlaßt der Antriebsmotor eine Schließbewegung der Drosselklappe, bis der Schlupf wieder im zulässigen Bereich liegt.

Es ist schon eine Betätigungsvorrichtung im Handel, bei welcher der Rechner für den Antriebsmotor alle Stellbewegungen der Drosselklappe veranlaßt, so daß diese vom Antriebsmotor ausgeführt werden. Um zu vermeiden, daß der Rechner unsinnige Steuerimpulse an den Antriebsmotor geben kann, ist eine aufwendige Sicherheitslogik erforderlich.

Vorteile der Erfindung

Die erfindungsgemäße Betätigungsvorrichtung mit den kennzeichnenden Merkmalen des Hauptanspruchs hat demgegenüber den Vorteil, daß während des Normalbetriebs des Kraftfahrzeugs die Drosselklappe zwar vom Antriebsmotor betätigt wird, doch veranlaßt dieser lediglich das Nachführen des Drosselklappenanschlags gegenüber dem sollwertgeberabhängigen Gegenanschlag. Eine eigenständige Drosselklappenregelung übernimmt der Antriebsmotor erst dann, wenn eines der Antriebsräder einen unzulässigen Schlupf aufweist und dadurch ein entsprechender Impuls eine Schließbewegung der Drosselklappe auslöst. Eine korrigierende Regelbewegung der Drosselklappe ist also lediglich in einem Bereich möglich, der durch die Schließstellung einerseits und durch den Gegenanschlag andererseits begrenzt ist. Durch die erfindungsmäße Maßnahme kann somit ein großer Teil der aufwendigen Sicherheitslogik entfallen.

Durch die in den Unteransprüchen aufgeführten Maßnahmen sind vorteilhafte Weiterbildungen und Verbesserungen der im Hauptanspruch angegebenen Betätigungsvorrichtung möglich.

Besonders vorteilhaft ist es, wenn das vom Antriebsmotor auf den Anschlag maximal ausgeübte Drehmoment kleiner ist als das von der Rückstellfeder auf den Gegenanschlag ausgeübte Drehmoment, weil dadurch im Störungsfall die Drosselklappe selbsttätig durch die Kraft der Rückstellfeder in Schließstellung gelangt.

Gemäß einer vorteilhaften Ausführungsform der Erfindung ist mit dem Fahrhebel ein elektrischer Sollwertgeber gekuppelt, dessen dem Steuergerät zugeführte Ausgangssignale ein Maß für die Momentanstellung des Fahrhebels sind, wobei das Steuergerät den Antriebsmotor zusätzlich in Abhängigkeit von diesen elektrischen Sollwertsignalen in einer Nachführbewegung zum Gegenanschlag steuert. Der mit der Drosselklappe drehfest verbundene Anschlag ist von einer Leerlauffeder belastet, deren Federkraft gegen die der Rückstellfeder arbeitet und wesentlich kleiner ist als diese. Der Vorteil dieser Ausführungsform liegt darin, daß bei Ausfall des Steuergeräts oder bei Abschaltung des Antriebsmotors im Störfall durch das Steuergerät die Drosselklappe durch die Leerlauffeder in einer angehobenen Leerlaufstellung gehalten und die Brennkraftmaschine nicht stillgesetzt wird. Ein unmittelbarer Notfahrbetrieb ohne erneutes Anlassen der Brennkraftmaschine ist möglich.

Nach einer zweckmäßigen Ausführungsform der Erfindung ist zwischen der Abtriebswelle des Antriebsmotors und der Drosselklappenwelle eine vorzugsweise elektromagnetische Kupplung angeordnet, die im ungestörten Betrieb eingerückt ist und bei Ausfall des Steuergeräts und/oder bei Stromlosschalten des Antriebsmotors durch das Steuergerät im Störfall ausrückt. Im Störfall wird damit der Anschlag von dem Antriebsmotor abgekuppelt. Die Leerlauffeder stellt die Drosselklappe in die gehobene Leerlaufstellung, wo der Anschlag bei unbetätigtem Fahrhebel am Gegenanschlag anliegt. Bei Verstellen des Gegenanschlags wird der Anschlag durch die Leerlauffeder nachgeführt, in Notfahrbetrieb ist möglich. Durch die erfindungsgemäße Trennung des Anschlags von dem Antriebsmotor im Störfall muß die Federkraft der Leerlauffeder nicht die Reibwiderstände von Antriebsmotor und Getriebe überwinden und kann besser auf die Rückstellfeder im Hinblick auf den ungestörten Betrieb abgestimmt werden.

Wenn gemäß einer weiteren Ausführungsform der Erfindung in der Verbindung zwischen Mitnehmerplatte und Fahrhebel ein Freilauf derart vorgesehen wird, daß die Mitnehmerplatte gegen den feststehenden Fahrhebel verschoben werden kann, wird ein sog. Tempomat-Betrieb ermöglicht. Bei einer von einem Bowdenzug gebildeten Verbindung wird dieser Freilauf dadurch sichergestellt, daß der Bowdenzug über einen beweglichen Anschlagbolzen in Zugrichtung an der Mitnehmerplatte angreift und in einer Führung an der Mitnehmerplatte geführt ist. Bei der Ausführung der Verbindung als Gestänge wird gemäß einer weiteren Ausführungsform der Erfindung die Mitnehmerplatte an einer Kurbelstange angelenkt, die mit einem Schwenkhebel mit feststehender Schwenkachse und zur Schwenkachse konzentrischer bogenförmiger Kulisse gelenkig verbunden ist. In der Kulisse wird ein Kulissenstein geführt, der auf einem um die Schwenkachse des Schwenkhebels schwenkbaren Hebel angeordnet ist. Letzterer ist an einer zum Fahrhebel führenden Verbindungsstange angelenkt. Im Tempomat-Betrieb stellt der bei feststehendem Fahrhebel in der Kulisse verschiebbare Kulissenstein den notwendigen Freilauf sicher.

Wird nach einer bevorzugten Ausführungsform der Erfindung der elektrische Sollwertgeber mit dem Gegenanschlag drehfest verbunden, so kann der Sollwertgeber vorteilhaft in der Vorrichtung selbst integriert werden. Zweckmäßigerweise ist dabei der Sollwertgeber als Drehwinkelpotentiometer ausgebildet, dessen elektrische Schleifbahn auf der Mitnehmerplatte und dessen die Schleifbahn kontaktierender Schleifer an einem Gehäuseteil der Vorrichtung angeordnet ist. Eine Vertauschung von Schleifbahn und Schleifer bezüglich der Anordnung auf Mitnehmerplatte bzw. Mitnehmerwelle und Gehäuseteil ist möglich.

Da üblicherweise neben dem Sollwertgeber ein elektrischer Istwertgeber vorhanden ist, der die Drehstellung der Drosselklappe erfaßt und dem Steuergerät mitteilt, wird vorteilhafterweise das Drehwinkelpotentiometer für den Sollwertgeber und das Drehwinkelpotentiometer für den Istwertgeber auf einem einzigen Bauteil untergebracht, das vorzugsweise als im Gehäuse feststehende Isolierplatte ausgebildet wird. Die Schleifbahnen der beiden Drehwinkelpotentiometer sind auf der Isolierplatte angeordnet, während die Schleifer drehfest mit der Mitnehmerwelle bzw. der Drosselklappenwelle verbunden sind.

Zeichnung

Ausführungsbeispiele der Erfindung sind in der Zeichnung dargestellt und in der nachfolgenden Beschreibung näher erläutert. Es zeigen:

Fig. 1 eine Prinzipskizze eines Kraftfahrzeugs, das mit der erfindungsgemäßen Betätigungsvorrichtung ausgestattet ist,

Fig. 2 einen Schnitt durch die in vergrößerter Darstellung gezeigte Betätigungsvorrichtung,

Fig. 3 einen Teilschnitt durch die Betätigungsvorrichtung entlang der Linie III-III in vergrößerter Darstellung, wobei sich die Drosselklappe in Schließstellung befindet,

Fig. 4 einen Teilschnitt gemäß Fig. 3, wobei sich die Drosselklappe in einer Stellung zwischen Schließstellung und Öffnungsstellung befindet,

Fig. 5 ausschnittweise eine Ansicht in Richtung Pfeil V in Fig. 2 einer Betätigungsvorrichtung gemäß einem weiteren Ausführungsbeispiel, schematisch dargestellt,

Fig. 6 eine ausschnittweise Ansicht der Betätigungsvorrichtung in Richtung Pfeil VI in Fig. 5,

Fig. 7 eine gleiche Darstellung wie in Fig. 5 einer Betätigungsvorrichtung gemäß einem dritten Ausführungsbeispiel,

Fig. 8 eine Ansicht in Richtung Pfeil VIII in Fig. 7,

Fig. 9 ausschnittweise eine Ansicht in Richtung Pfeil IX in Fig. 2 der Betätigungsvorrichtung gemäß Fig. 5 und 6 oder Fig. 7 und 8.

Beschreibung des Ausführungsbeispiels

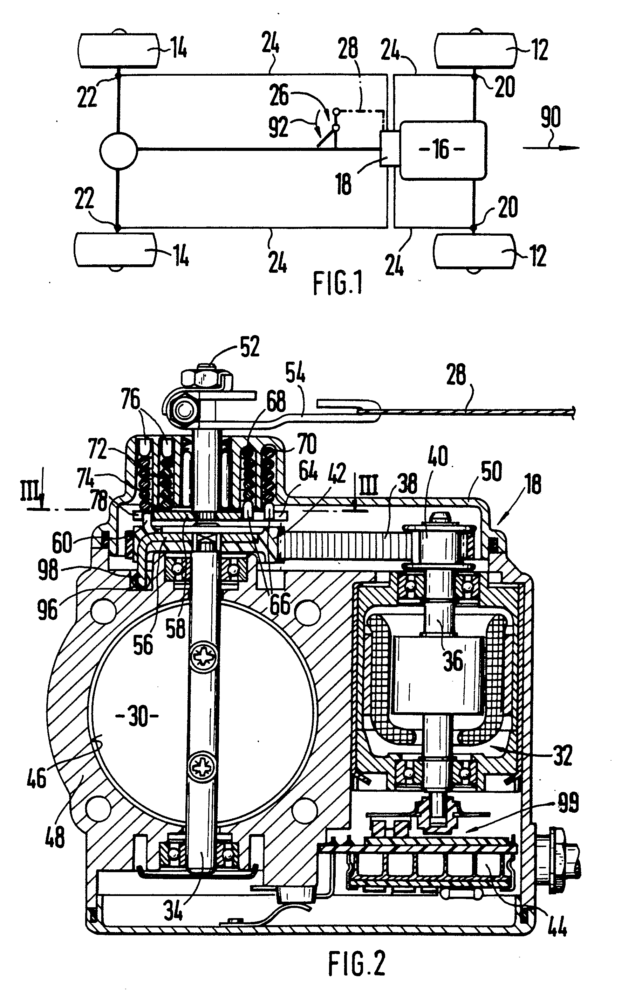

Ein in Fig. 1 in Draufsicht prinzipiell dargestelltes Kraftfahrzeug 10 weist zwei Antriebsräder 12 und zwei mitlaufende Räder 14 auf. Weiter hat das Kraftfahrzeug 10 zum Antrieb eine Brennkraftmaschine 16, der eine Vorrichtung 18 zum Betätigen der Drosselklappe zugeordnet ist. Zu der Betätigungsvorrichtung 18 gehören Sensoren zum Messen des Schlupfes zwischen der Fahrbahnoberfläche und den Fahrzeugrädern 12,14. Die Sensoren der Antriebsräder 12 sind mit 20 bezeichnet, während die Sensoren der mitlaufenden Räder 14 mit der Bezugszahl 22 versehen sind. Die Sensoren 20 und 22 sind über Steuerleitungen 24 mit einer zur Betätigungsvorrichtung 18 gehörenden Steuerelektronik 44 (Fig. 2) verbunden. Weiter ist in Fig. 1 noch der Fahrhebel oder das Gas- oder Fahrpedal 26 angedeutet, welches einen Sollwertgeber für die Betätigungsvorrichtung 18 bildet. Das Gaspedal 26 ist über ein als Bowdenzug 28 ausgebildetes Element mit der Betätigungsvorrichtung 18 verbunden.

Wie Fig. 2 zeigt, weist die Betätigungsvorrichtung 18 eine Drosselklappe 30 auf, die über einen elektrischen Antriebsmotor 32 um die Längsachse einer zur Drosselklappe 30 gehörenden Drosselklappenwelle 34 drehbar ist. Die Antriebswelle 36 des drehrichtungsumkehrbaren, elektrisch kommutierten Antriebsmotors 32 ist über einen Zahnriemen 38 mit der Drosselklappenwelle 34 verbunden. Dazu weist sowohl die Abtriebswelle 36 als auch die Drosselklappenwelle 34 je ein mit der Verzahnung des Zahnriemens 38 zusammenarbeitendes Zahnrad auf. Das Zahnrad der Abtriebswelle 36 ist mit 40 bezeichnet worden, während das Zahnrad der Drosselklappenwelle mit 42 bezeichnet ist. Die Kommutierung des Antriebsmotors 32 erfolgt über die Steueroder Zentralelektronik 44, in welche auch die Impulse der Sensoren 20 und 22 eingespeist werden. Die Drosselklappe 30 ist in einem zur Brennkraftmaschine 16 führenden Ansaugrohr 46 angeordnet, das von einem zur Brennkraftmaschine 16 gehörenden Vergaser zu den Brennkammern der Brennkraftmaschine führt. Je nach Stellung der Drosselklappe 30 wird den Brennkammern mehr oder weniger des zündfähigen Gemischs zugeführt. Die Zahnriemenübersetzung 40,38,42 zwischen der Abtriebswelle 36 des Antriebsmotors 32 und der Drosselklappenwelle 34 ist mit einem Deckel 50 abgedeckt, der zum Gehäuse 48 gehört.

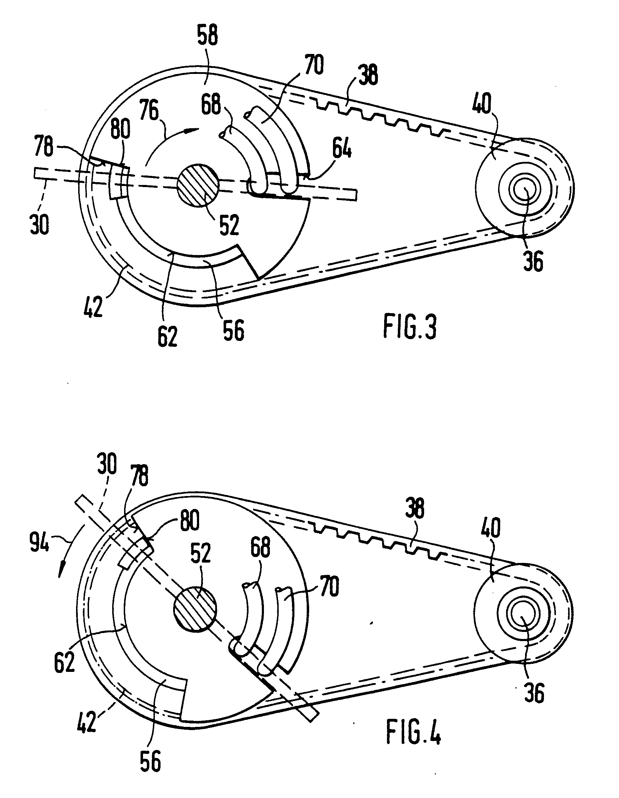

Im Deckel 50 ist eine Hilfswelle 52 drehbar gelagert, deren Längs- oder Drehachse mit der Drehachse der Drosselklappenwelle 34 fluchtet. An der Hilfswelle 52 ist ein Bauteil 54, z.B. ein Bowdenzug oder Hebel, befestigt, an welchem der Bowdenzug 23 angreift, welcher zum Fahrpedal 26 führt. An dem der Hilfswelle 52 zugewandten Ende der Drosselklappenwelle 34 ist eine Scheibe 56 befestigt, während an dem der Drosselklappenwelle 34 zugewandten Ende der Hilfswelle 52 eine Platte 58 befestigt ist. Wie insbesondere Fig. 2 zeigt, befinden sich die Scheibe 56 und die Platte 58 in zwei zueinander parallelen, einander benachbarten Ebenen. Aus der Scheibe 56 ist eine Nase 60 herausgebogen, die sich bis in die Ebene erstreckt, in welcher sich die Platte 58 befindet. Wie insbesondere die Fig. 3 und 4 zeigen, weist die Platte 58 einen kreissegmentförmigen Ausschnitt 62 auf, in welchen die Nase 60 der Scheibe 56 eintaucht. Weiter hat die Platte 58 einen randoffenen, im wesentlichen radial verlaufenden Schlitz 64, in welchen Abkröpfungen 66 von zwei zugfederartig aufgebauten Schenkelfedern 68,70 eintauchen, welche von Ringnuten 72,74 des Deckels 50 aufgenommen sind. Weiter sind auch die anderen, in den Ringnuten 72,74 befindlichen Enden 76 der beiden Schenkelfedern 68,70 abgekröpft und an Schultern des Deckels 50 festgelegt. Die beiden Schenkelfedern 68,70 sind maßlich derart voneinander verschieden, daß die Schenkelfeder 68 von der anderen Schenkelfeder 70 umgeben ist. Beide Schenkelfedern 68,70 sind derart vorgespannt, daß sie die Platte 58 entgegen einem in Fig. 3 angegebenen Pfeil 76 zu drehen suchen. Dabei schlägt eine Radialkante 78 des Ausschnitts 62 in der Platte 58 an einer ihr zugewandten Stirnseite 80 der Nase 60 an. Die Stirnseite 80, der über die Drosselklappenwelle 34 fest mit der Drosselklappe 30 verbundenen Nase 60, bildet somit einen Anschlag, der mit einem in Schließrichtung der Drosselklappenfeder belasteten Gegenanschlag - nämlich die Kante 78 des Ausschnitts 62 in der Platte 58 zusammenarbeitet. Zu beachten ist noch besonders, daß das von dem Antriebsmotor 32 erzeugte Drehmoment kleiner ist als das von den beiden Schenkelfedern 68,70 erzeugte Rückstellmoment, welches über die Platte 58, den Gegenanschlag 78, den Anschlag 80 und die Scheibe 56 auf die Drosselklappe 30 bzw. auf die Drosselklappenwelle 34 übertragen wird. Weiter hat die Betätigungsvorrichtung 18 noch eine Einrichtung 99 zur Kommutierung des Antriebsmotors 32, welche auch als Istwertgeber die jeweilige Stellung der Drosselklappe 30 erfaßt und der Zentralelektronik 44 meldet.

Während des Normalbetriebs des Kraftfahrzeugs - also wenn der Schlupf der Antriebsräder 12 innerhalb vorgegebener Grenzen bleibt und das Fahrzeug in Richtung des Pfeils 90 (Fig. 1) fährt, drückt der Fahrer des Kraftfahrzeugs 10 das Fahrpedal 26 in Richtung des Pfeils 92, so daß das Fahrzeug beschleunigt. Dabei zieht der Bowdenzug 28 den Hebel 54 und damit die Hilfswelle 52 in Richtung des Pfeils 76 (Fig. 3), so daß die Platte 58 in ihre in Fig. 4 dargestellte Betriebsstellung gelangt. Weil der Antriebsmotor 32 während des Normalbetriebs des Kraftfahrzeugs 10 das Zahnrad 42, und mit diesem zusammen die Scheibe 56 und die Drosselklappe 30, ständig in Richtung des Pfeils 76 zu drehen sucht, folgt die Nase 60 der Bewegung der Anschlagkante 78, wenn diese sich in Richtung des Pfeils 76 dreht. Der Antriebsmotor 32 führt somit also lediglich eine Nachführbewegung aus im Rahmen dessen, was das als Drosselklappen-Sollwertgeber fungierende Fahrpedal 26 über den Bowdenzug 28 und die Anschlagkante 78 an der Platte 58 vorgibt. Wenn jedoch einer der Sensoren 20 der Antriebsräder 12 einen zu hohen Schlupf an die Zentralelektronik 44 meldet, steuert diese den Antriebsmotor 32 um, so daß sich die Nase 60 von der Gegenanschlagkante 78 löst und die Drosselklappe 30 in Richtung ihrer Schließstellung zurückschwingt. Diese Rückstellbewegung der Drosselklappe 30 ist in Fig. 4 durch den mit der Bezugszahl 94 versehenen Pfeil angedeutet. Die Drosselklappe 30 kann somit durch den Antriebsmotor 32 innerhalb eines Bereichs bewegt werden, der durch die momentane Stellung der Gegenanschlagkante 78 einerseits und durch einen Schließstellungsanschlag 96 (Fig.2) begrenzt ist. Mit dem Schließstellungsanschlag 96 arbeitet ein Schenkel 98 zusammen, der aus der Scheibe 56 herausgebogen ist, und zwar entgegengesetzt der Nase 60. Der Anschlag 96 ist am Gehäuse 48 ausgebildet. Bei Störungen, beispielsweise in der Zentralelektronik 44, können die möglicherweise an dem Antriebsmotor 32 gelangenden falschen Steuersignale ohne Schwierigkeiten unschädlich gemacht werden, weil beim Loslassen des Fahrpedals 26 durch den Fahrzeuglenker, die beiden Rückstellfedern 68,70 die Drosselklappe 30 entgegen einer möglicherweise falschen Drehbewegung des Antriebsmotors 32 in ihre Leerlaufstellung zwingen. Dies wird durch das Rückstellmoment der Schenkelfedern 68,70 erreicht, das größer ist als das vom Antriebsmotor 32 maximal erzeugte Drehmoment.

Zur Prüfung der Funktionstüchtigkeit der beiden ein Federpaket bildenden Schenkelfedern 68,70 kann beispielsweise wie folgt verfahren werden: Über die Zentralelektronik 44 wird in kurzen Abständen, beispielsweise alle 50 ms das Drehmoment des Antriebsmotors 32 für einige Millisekunden verdoppelt. Sollte eine der beiden Schenkelfedern 68,70 gebrochen sein, wäre das Motordrehmoment größer gegenüber dem der verbleibenden Schenkelfeder, so daß diese Testbewegungen als "Zucken" der Vorrichtung über die Einrichtung 99 vom Rechner erkannt wird, der dann auf Notlauf schaltet, wobei die Betätigungsvorrichtung 18 stromlos wird. Die Eigendiagnose kann diesen mechanischen Defekt während des Fahrbetriebs erkennen und speichern bzw. an einen Tester melden.

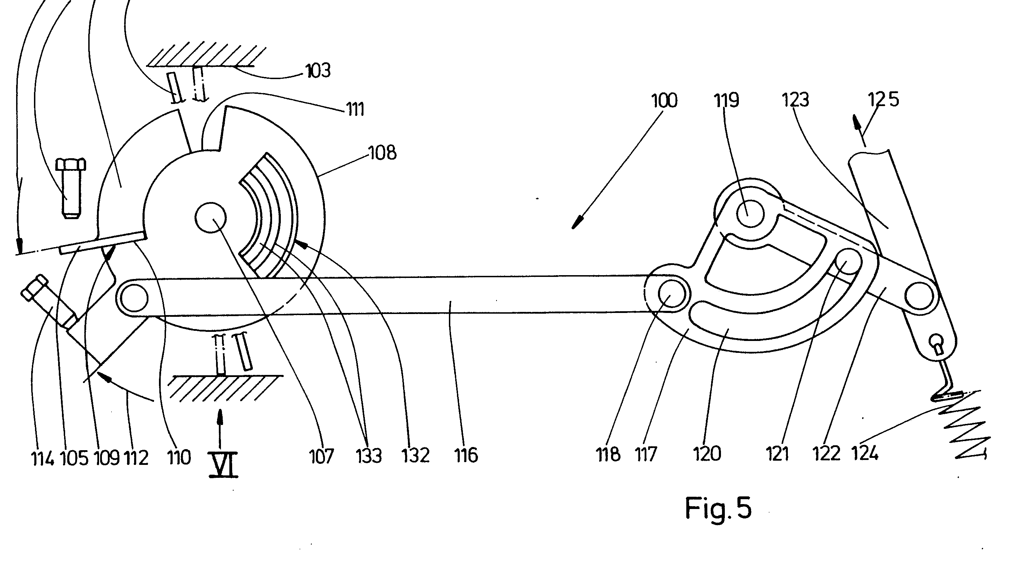

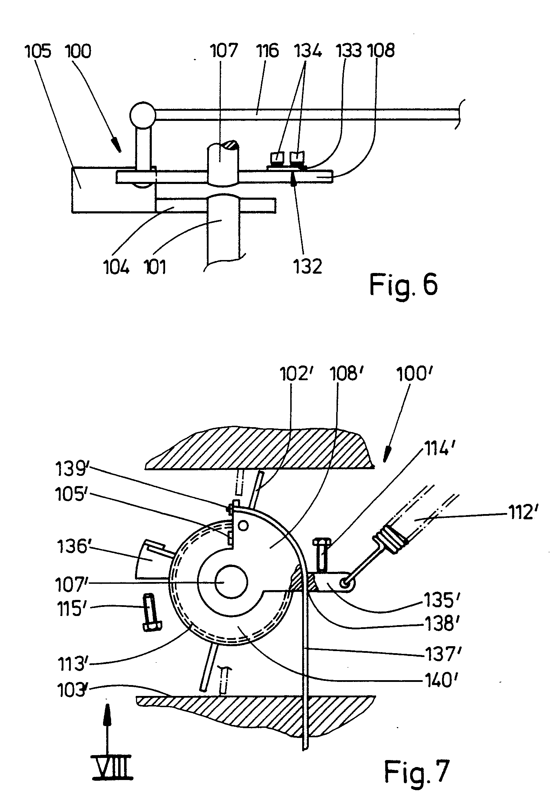

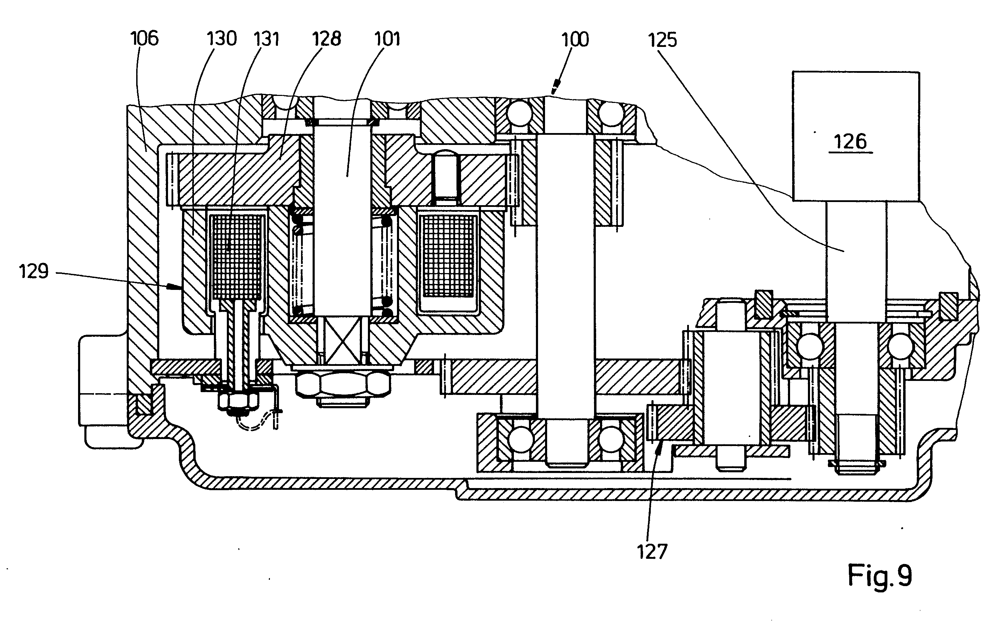

Bei der in Fig. 5 und 6 ausschnittweise dargestellten Betätigungsvorrichtung 100 für die mit der Drosselklappenwelle 101 starr verbundene Drosselklappe 102 zum Verschließen bzw. mehr oder weniger starken Öffnen des Ansaugrohrs 103 ist mit der Drosselklappenwelle 101 drehfest ein Scheibensegment 104 verbunden, von dem ein Anschlag 105 axial absteht. Fluchtend mit der Drosselklappenwelle 101 ist in einem Gehäuse 106 (Fig. 9) eine Mitnehmerwelle 107 drehbar gelagert (Fig. 6). Auf der Mitnehmerwelle 107 sitzt drehfest eine Mitnehmerplatte 108, die einen mit dem Anschlag 105 zusammenwirkenden Gegenanschlag 109 trägt. Wie in dem Ausführungsbeispiel der Betätigungsvorrichtung 18 gemäß Fig. 1 - 4 wird der Gegenanschlag 109 von der radialen Begrenzungskante 110 einer in der Mitnehmerplatte 108 vorhandenen Ausnehmung 111 gebildet. An der Mitnehmerplatte 108 greift eine vorgespannte Rückstellfeder an, die in Fig. 5 durch den Pfeil 112 symbolisch dargestellt ist, wobei der Pfeil die Wirkrichtung der Rückstellfeder angibt. Die Rückstellfeder 112 stützt sich dabei einerseits an dem Gehäuse 106 und andererseits an der Mitnehmerplatte 108 ab. An dem Scheibensegment 104 greift eine Leerlauffeder an, die in Fig. 5 durch den Pfeil 113 symbolisiert ist, wobei der Pfeil die Wirkrichtung der Leerlauffeder 113 angibt. Die Leerlauffeder 113 stützt sich dabei an dem Gehäuse 106 und an dem Scheibensegment 104 ab. Die beiden Federn 112,113 können - wie dies in Fig. 2 dargestellt ist - als Drehfedern ausgebildet sein, deren eine Schenkelenden im Gehäuse 106 gehalten sind und deren andere Schenkelenden sich an der Mitnehmerplatte 108 bzw. an dem Scheibensegment 104 abstützen. Die Federkraft der Rückstellfeder 112 ist dabei mindestens doppelt so groß wie die Federkraft der Leerlauffeder 113. Sowohl der Mitnehmerplatte 108 als auch dem Scheibensegment 104 ist ein justierbarer Festanschlag zugeordnet, welcher den Drehweg von Mitnehmerplatte 108 und Scheibensegment 104 begrenzt. Der der Mitnehmerplatte 108 zugeordnete Festanschlag 114 ist dabei derart angeordnet, daß beim Anliegen der Mitnehmerplatte 108 an dem Festanschlag 114 und beim Anliegen des Anschlags 105 an dem Gegenanschlag 109 die Drosselklappe 102 eine gehobene Leerlaufstellung einnimmt, wie diese in Fig. 5 durch die ausschnittweise ausgezogen dargestellte Drosselklappe 102 gekennzeichnet ist. Der dem Scheibensegment 104 zugeordnete Festanschlag 115 ist dagegen derart angeordnet, daß bei Anliegen des Anschlags 105 an dem Festanschlag 115 gegen die Kraft der Leerlauffeder 113 die Drosselklappe 102 ihre Schließstellung einnimmt, wie dies in Fig. 5 strichpunktiert angedeutet ist.

An der Mitnehmerplatte 108 ist eine Kurbelstange 116 angelenkt, die mit einem segmentartig ausgebildeten Schwenkhebel 117 über ein Gelenk 118 verbunden ist. Der Schwenkhebel 117 ist um eine feststehende Schwenkachse 119 schwenkbar und weist eine zur Schwenkachse 119 konzentrische kreisbogenförmige Kulisse 120 auf. In der Kulisse 120 ist ein Kulissenstein 121 verschieblich geführt, der auf einem einarmigen Hebel 122 angeordnet ist. Der Hebel 122 ist ebenfalls um die Schwenkachse 119 schwenkbar und ist mit einer Koppelstange 123 gelenkig verbunden. Die Koppelstange 123 ist an dem hier nicht dargestellten Fahrhebel, auch Fahrpedal oder Gaspedal genannt, angelenkt und wird durch eine Zugfeder 124 bei unbetätigtem Fahrhebel in einer in Fig. 5 dargestellten Grundstellung gehalten. Die Verschieberichtung der Koppelstange 123 bei Fahrhebelbetätigung erfolgt gegen die Zugkraft der Zugfeder 124 und ist durch den Pfeil 145 in Fig. 5 gekennzeichnet.

Wie aus der ausschnittweisen Darstellung gemäß Fig. 9 der Betätigungsvorrichtung zu erkennen ist, ist die Abtriebswelle 125 des mit 126 schematisch angedeuteten Antriebsmotor für die Drosselklappe 102 über ein Zahnradgetriebe 127 mit einem auf der Drosselklappenwelle 101 freidrehenden Antriebsrad 128 gekuppelt. Fest mit der Drosselklappenwelle 101 ist ein Elektromagnet 129 verbunden, dessen Anker von dem Antriebsrad 128 gebildet wird. Das Antriebsrad 128 liegt unmittelbar vor der Öffnung eines topfförmigen Magnetgehäuses 130, in dem eine zylinderförmige Erregerspule 131 angeordnet ist. Bei unbestromter Erregerspule 131 kann sich das Antriebsrad 128 frei auf der Drosselklappenwelle 101 drehen. Bei bestromter Erregerspule wird das Antriebsrad 128 an das Magnetgehäuse 130 angelegt und dort kraftschlüssig gehalten. Das über das Zahnradgetriebe 127 angetriebene Antriebsrad 128 ist damit drehfest mit der Drosselklappenwelle 101 gekuppelt, so daß eine Drehung der Abtriebswelle 125 auf die Drosselklappenwelle 101 übertragen wird. Die Bestromung der Erregerspule 131 erfolgt über ein hier nicht dargestelltes elektronisches Steuergerät, das der Zentralelektronik 44 in Fig. 2 entspricht. Dabei wird bei ungestörtem Betrieb die Erregerspule 131 ständig bestromt, während bei Ausfall des Steuergeräts und/oder bei Stromlosschalten des Antriebsmotors 126 im Störfall auch die Bestromung der Erregerspule 131 unterbrochen wird und damit die von Antriebsrad 128 und Elektromagnet 129 gebildete elektromagnetische Kupplung ausrückt. Mit Ausrükken der elektromagnetischen Kupplung ist die Drosselklappenwelle 101 und damit die Drosselklappe 102 von dem Antriebsmotor 126 und dem Zahnradgetriebe 127 abgekoppelt.

Die Drosselklappe 102 wird in dem Schwenkbereich des Scheibensegments 104 zwischen dem justierbaren Festanschlag 115 und dem Gegenanschlag 109 an der Mitnehmerplatte 108 durch den elektrischen Antriebsmotor 126 betätigt, der ein entsprechendes Stellsignal bzw. eine entsprechende Stellspannung von dem Steuergerät erhält. Hierzu ist ein elektrischer Sollwertgeber 132 mit dem Fahrhebel gekuppelt, dessen dem Steuergerät zugeführten Ausgangssignale ein Maß für die Momentanstellungen des Fahrhebels sind. Das Steuergerät steuert den Antriebsmotor 126 in Abhängigkeit von diesen Sollwertsignalen, so daß die Drosselkappe 102 in dem angegebenen Bereich zwischen dem justierbaren Festanschlag 115 und dem Gegenanschlag 109 ausschließlich von dem Antriebsmotor 126 verstellt wird. Wie in Fig. 5 und 6 andeutungsweise skizziert ist, ist der Sollwertgeber 132 als Drehwinkelpotentiometer arsgebildet, dessen elektrische Schleifbahnen 133 auf der Mitnehmerplatte 108 konzentrisch zur Mitnehmerwelle 107 angeordnet sind (Fig. 5). Dabei genügt es, wenn sich die Schleifbahnen 133 nur über einen bestimmten Drehwinkelabschnitt der Mitnehmerplatte 108 erstrecken, der dem maximalen Drehhub der Mitnehmerplatte 108 entspricht. Die die Schleifbahnen 133 kontaktierenden Schleifer 132 des Drehwinkelpotentiometers sind im Gehäuse 106 befestigt.

Die Wirkungsweise der beschriebenen Betätigungsvorrichtung 100 ist wie folgt:

Leerlauf: Das Steuergerät regelt den Antriebsmotor 126 und damit die Drosselklappe 102 in dem Bereich zwischen dem justierbaren Festanschlag 115 und dem Gegenanschlag 109, dessen Lage durch die unter der Wirkung der Rückstellfeder 112 an dem zugeordneten Festanschlag 114 anliegende Mitnehmerplatte 108 festgelegt ist. Fällt das Steuergerät aus oder wird der Antriebsmotor 126 wegen Störungen stromlos geschaltet, so wird die Drosselklappe 102 durch die Leerlauffeder 113 immer offen gehalten. Die Brennkraftmaschine geht nicht aus. Der Öffnungswinkel der Drosselklappe 102 beträgt ca. 10°, muß jedoch dem Fahrzeug und der Brennkraftmaschine angepaßt werden.

Fahrbetrieb: Der Fahrerwunsch wird den Fahrhebel mitgeteilt. Dessen Stellung wird über die Koppelstange 123 den Hebel 122, den Schwenkhebel 117 und die Kurbelstange 116 auf die Mitnehmerplatte 108 übertragen und dadurch die Mitnehmerplatte 108 um einen bestimmten Drehwinkel entgegen der Kraft der Rückstellfeder 112 verschwenkt. Diese Verdrehung der Mitnehmerplatte 108 bewirkt eine entsprechende Einstellung des Sollwertgebers 132, dessen Ausgangssignal an das Steuergerät übertragen wird. Aus dem Ausgangssignal des Sollwertgebers 132 bildet das Steuergerät ein Stellsignal für den Antriebsmotor 126, der bei eingerückter elektromagnetischer Kupplung 128,129 die Drosselklappenwelle 101 verdreht und damit die Drosselklappe 102 und das Scheibensegment 104 der Mitnehmerplatte 108 nachfährt. Dabei ist immer gewährleistet, daß der Anschlag 105 nicht den Gegenanschlag 109 an der Mitnehmerplatte 108 erreicht. Tritt während des Fahrbetriebs Schlupf in den Antriebsrädern 12 auf, so wird dieser Schlupf - wie eingangs bereits beschrieben - über die Sensoren 20 dem Steuergerät gemeldet. Das Steuergerät steuert nunmehr den Antriebsmotor 126 um, so daß die Drosselklappe 102 in Richtung Schließen verschwenkt wird, wobei das Scheibensegment 104 so gedreht wird, daß sich sein Anschlag 105 von dem Gegenanschlag 109 entfernt (ASR-Fall). Die Mitnehmerplatte 108 und damit der Sollwertgeber 132 behalten ihre von der Fahrhebelstellung vorgegebene Lage bei.

Tempomat: Wird der an sich bekannte Tempomat eingeschaltet, der unabhängig von der Stellung des Fahrhebels das Fahrzeug auf eine vorgegebene Geschwindigkeit zu halten sucht, wird der Antriebsmotor 126 von dem Steuergerät so beeinflußt, daß er die Drosselklappenwelle 101 soweit antreibt, daß der Anschlag 105 des Scheibensegments 104 an dem Gegenanschlag 109 der Mitnehmerplatte 108 anliegt urd letztere gegen die Kraft der Rückstellfeder 112 antreibt. Die Kulisse 120 mit Kulissenstein 121 stellt dabei sicher, daß trotz der Bewegung der Kurbelstange 116 zusammen mit der Mitnehmerplatte 108 die Koppelstange 123 zum Fahrhebel unbeeinflußt bleibt.

Notfahren: Fällt das Steuergerät aus oder wird der Antriebsmotor 126 infolge von Störungen vom Steuergerät stromlos geschaltet, wird auch die Erregerspule 131 des Elektromagneten 129 stromlos geschaltet. Die von Antriebsrad 128 und Elektromagneten 129 gebildete Kupplung zwischen Drosselklappenwelle 101 und Antriebsmotor 126 rückt aus.

Die Rückstellfeder 112 dreht die Mitnehmerplatte 108 bis letztere an ihrem Festanschlag 114 anschlägt. Mit der Mitnehmerplatte 108 wird auch die Drosselklappenwelle 102 in Richtung ihrer Schließstellung verschwenkt. Die Leerlauffeder 113 verdreht das Scheibensegment 104, bis der Anschlag 105 an dem Gegenanschlag 109 anliegt und überführt dadurch die Drosselklappe 102 in eine angehobene Leerlaufstellung. Das Zahnradgetriebe 127 und der Antriebsmotor 126 ist durch die ausgerückte Kupplung 128/129 von der Drosselklappenwelle 101 getrennt, so daß an der Drosselklappenwelle 101 keine zusätzlichen Reibwiderstände auftreten. Wird nun der Fahrhebel betätigt, so wird - wie bereits beschrieben - die Mitnehmerplatte 108 über die Kurbelstange 116, den Schwenkhebel 117, den Hebel 122 und die Kurbelstange 123 gedreht. Die Leerlauffeder 113 hält bei der Bewegung der Mitnehmerplatte 108 den Anschlag 105 an dem Gegenanschlag 109, so daß die Drosselklappe 102 entsprechend der Drehbewegung der Mitnehmerplatte 108 verschwenkt wird.

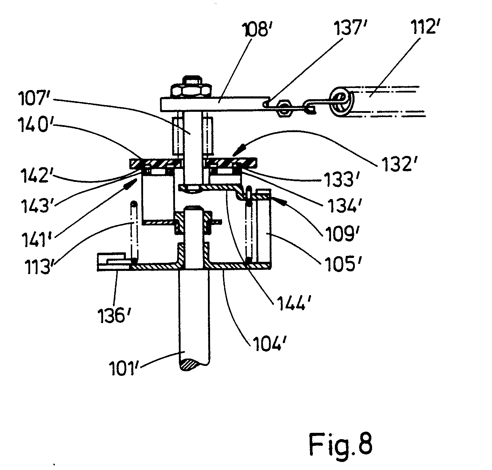

In Fig. 7 und 8 ist eine gegenüber der Betätigungsvorrichtung 100 modifizierte Betätigungsvorrichtung 100′ in Draufsicht und Unteransicht dargestellt. Insoweit gleiche Bauteile übereinstimmen, sind sie mit gleichen Bezugszeichen versehen, die jedoch zur Unterscheidung mit einem Beistrich gekennzeichnet sind. Anschlag 105′ und Gegenanschlag 109′ sind wiederum drehfest mit der Drosselklappenwelle 101′ bzw. der Mitnehmerwelle 107′ verbunden. Der Anschlag 105′ steht dabei rechtwinklig von einer Scheibe 104′ ab, die drehfest auf der Drosselklappenwelle 101′ sitzt. Der Gegenanschlag 109′ wird von einem radial von der Mitnehmerwelle 107′ wegstehenden und mit dieser drehfest verbundenen Bügel 144′ gebildet. Mit der Mitnehmerwelle 107′ ist eine segmentförmige Mitnehmerplatte 108′ starr verbunden. Mitnehmerplatte 108′ und Scheibe 104′ sind über eine als Drehfeder ausgebildete Zugfeder 113′ miteinander gekoppelt, welche die Funktion der Leerlauffeder in Fig. 5 und 6 übernimmt. Die Rückstellfeder 112′ ist als Zugfeder ausgebildet, die einerseits am Gehäuse und andererseits an einem radial von der Mitnehmerplatte 108′ vorspringenden Ausleger 135′ angreift. Die Federkraft der Rückstellfeder 112′ ist wiederum mehr als doppelt so groß wie die Kraft der Leerlauffeder 113′ und dieser entgegengerichtet. Unter der Wirkung der Rückstellfeder 112′ liegt der Ausleger 135′ an dem justierbaren Festanschlag 114′ an. Die Scheibe 104′ trägt ebenfalls einen radialen Ausleger 136′, der mit dem justierbaren Festanschlag 115′ zusammenwirkt. Die beiden Festanschläge 114′ und 115′ sind in gleicher Weise angeordnet wie zu Fig. 5 und 6 beschrieben. Die Verbindung zwischen der Mitnehmerplatte 108′ und dem Fahrhebel wird hier nicht durch ein Gestänge sondern durch einen Bowdenzug 137′ hergestellt. Dieser Bowdenzug 137′ ist in einer Bohrung 138′ im Ausleger 135′ geführt und endseitig in einem Anschlagbolzen 139′ gehalten, der an der Mitnehmerplatte 108′ anliegt. Dadurch ist im Tempomat-Betrieb ein Freilauf der Mitnehmerplatte 108′ im Uhrzeigersinn sichergestellt, ohne daß der Bowdenzug 137′ oder der Fahrhebel beeinflußt werden.

Der Sollwertgeber 132′ ist hier ebenfalls als Drehwinkelpotentiometer ausgebildet. Seine Schleifbahnen 133′ sind jedoch auf einem Isolierstoffträger 140′ angeordnet, der im nicht dargestellten Gehäuse gehalten ist. Die wiederum die Schleifbahnen 133′ kontaktierenden Schleifer 134′ sind drehfest an der Mitnehmerplatte 108′ befestigt. Zusätzlich ist in Fig. 8 noch ein Istwertgeber 141′ vorhanden, der die momentane Schwenkstellung der Drosselklappe 102′ an das Steuergerät meldet. Dieser Istwertgeber 141′ ist ebenso wie der Sollwertgeber 132′ als Drehwinkelpotentiometer ausgebildet, wobei dessen Schleifbahnen 142′ ebenso wie die Schleifbahnen 133′ des Sollwertgebers 132′ auf dem Isolierstoffträger 140′ angeordnet sind, und zwar wiederum koaxial zur Mitnehmerwelle 107′, die von dem Isolierstoffträger 140′ umschlossen wird. Die auf den elektrischen Schleifbahnen 142′ aufliegenden Schleifer 143′ sind über einen Halter 144′ drehfest mit der Drosselklappenwelle 101′ verbunden. Diese Ausführungsform von Sollwertgeber 132′ und Istwertgeber 141′ hat den Vorteil, daß die feststehende Teile der Drehwinkelpotentiomter in kontruktiv einfacher Weise auf einem einzigen Bauteil, nämlich dem Isolierstoffträger 140′, vereint sind.

Die Wirkungsweise der modifizierten Betätigungsvorrichtung 100′ ist die gleiche wie sie zu der Betätigungsvorrichtung 100 gemäß Fig. 5 und 6 beschrieben ist.

## Ansprüche

1. Vorrichtung zum Betätigen der Drosselklappe einer Brennkraftmaschine insbesondere eines Kraftfahrzeugs, mit einem reversiblen elektrischen Antriebsmotor, dessen Abtriebswelle mit der über eine Dosselklappenwelle schwenkbaren Drosselklappe zu deren Verschwenkung wirkverbunden ist, wobei die Sollschwenkstellung der Drosselklappe mittels eines Fahrhebels vorgebbar ist, und mit einem Steuergerät zum Steuern des Antriebsmotors in Abhängigkeit von mindestens dem Schlupf der Fahrzeugantriebsräder, dadurch gekennzeichnet, daß die Drosselklappe (30;102;102′) drehfest mit einem Anschlag (80;105;105′) gekoppelt ist, dem ein beweglicher, in Schließrichtung der Drosselklappe (30;102;102′) durch eine Rückstellfeder (68,70;112;112′) federbelasteter Gegenanschlag (78;109;109′) zugeordnet ist, und daß der Gegenanschlag (78;109;109′) mit dem Fahrhebel derart gekoppelt ist, daß er vom Fahrhebel gegen die Kraft der Rückstellfeder (68,70;112;112′) bewegt wird.

2. Vorrichtung nach Anspruch 1, dadurch gekennzeichnet, daß der Antriebsmotor (32) von dem Steuergerät (44) im ungestörten Betrieb derart gesteuert wird, daß er den Anschlag (80) dem Gegenanschlag (78) nachführt, so daß bei schlupflosen Antriebsrädern (20) des Kraftfahrzeugs (10) der Anschlag (80) stets am Gegenanschlag (78) anliegt.

3. Vorrichtung nach Anspruch 2, dadurch gekennzeichnet, daß das vom Antriebsmotor (32) auf den Anschlag (80) maximal ausgeübte Drehmoment kleiner ist als das von der Rückstellfeder (68,70) auf den Gegenanschlag (78) ausgeübte Drehmoment.

4. Vorrichtung nach einem der Ansprüche 1 - 3, dadurch gekennzeichnet, daß der Anschlag (80) der Drosselklappe (30) an einer mit der Drosselklappenwelle (34) fest verbundenen Scheibe (56) angeordnet ist und daß der Gegenanschlag (78) an einer der Scheibe (56) benachbarten Platte (58) sitzt, welche mit einer zur Drosselklappenwelle (34) fluchtenden Hilfswelle (52) fest verbunden ist.

5. Vorrichtung nach Anspruch 4, dadurch gekennzeichnet, daß sowohl die Drosselklappenwelle (34) als auch die Hilfswelle (52) in zusammengehörenden Körpern (48,50) gelagert sind.

6. Vorrichtung nach Anspruch 5, dadurch gekennzeichnet, daß die Hilfswelle (52) mit einem Ende aus ihrem Körper (50) ragt und daß dieses Ende mit einem Bauteil (54) versehen ist, an welchem ein mit dem Fahrhebel (26) verbundenes Element (28) angreift.

7. Vorrichtung nach Anspruch 5 oder 6, dadurch gekennzeichnet, daß die Rückstellfeder eine die Hilfswelle (52) umgebende, vorgespannte Schenkelfeder (68,70) aufweist, deren eines Ende an dem die Hilfswelle (52) lagernden Körper (50) festgelegt und deren anderes Ende (66) an der Platte (58) gehalten ist.

8. Vorrichtung nach Anspruch 7, dadurch gekennzeichnet, daß die Rückstellfeder eine zweite gleichartige Schenkelfeder (70) aufweist, die im wesentlichen konzentrisch zur ersten Schenkelfeder (68,70) angeordnet ist.

9. Vorrichtung nach einem der Ansprüche 4 - 8, dadurch gekennzeichnet, daß der Anschlag (80) der Drosselklappe (30) an einer aus der Scheibe (56) zur Platte (58) herausgebogenen Nase (60) gebildet ist, die länger ist als der Abstand zwischen der Scheibe (56) und der Platte (58).

10. Vorrichtung nach einem der Ansprüche 4 - 9, dadurch gekennzeichnet, daß der Gegenanschlag durch eine Begrenzungskante (78) einer in der Platte (58) angeordneten Ausnehmung (62) gebildet ist.

11. Verfahren zum Prüfen der Funktionstüchtigkeit eines aus wenigstens zwei Rückstellfedern bestehenden Federpakets einer Vorrichtung gemäß Anspruch 8, dadurch gekennzeichnet, daß das Drehmoment des Antriebsmotors (32) entgegen der Spannung des Federpakets (68,70) in vorzugsweise regelmäßigen Zeitabständen erhöht wird und daß eine Einrichtung (99) eine daraus resultierende Bewegung der Motorwelle (36) bzw. der Drosselklappenwelle (34) überwacht und anzeigt.

12. Vorrichtung nach Anspruch 1, dadurch gekennzeichnet, daß mit dem Fahrhebel ein elektrischer Sollwertgeber (132;132′) gekuppelt ist, dessen dem Steuergerät zugeführt Ausgangssignale ein Maß für die Momentanstellung des Fahrhebels sind, daß das Steuergerät den Antriebsmotor (126) in Abhängigkeit von den Sollwertsignalen steuert und daß der mit der Drosselklappe (102;102′) drehfest verbundene Anschlag (105;105′) von einer Leerlauffeder (113;113′) mit gegen die Wirkrichtung der Rückstellfeder (112;112′) gerichteter Federkraft belastet ist, die wesentlich kleiner ist als die Federkraft der Rückstellfeder (112;112′), vorzugsweise gleich oder kleiner als die halbe Federkraft der Rückstellfeder (112;112′).

13. Vorrichtung nach Anspruch 12, dadurch gekennzeichnet, daß zwischen der Abtriebswelle (125) des Antriebsmotors (126) und der Drosselklappenwelle (101) eine vorzugsweise elektromagnetische Kupplung (128,129) angeordnet ist, die derart ausgebildet ist, daß sie in ungestörtem Betrieb eingerückt ist und bei Ausfall des Steuergeräts und/oder bei Stromlosschalten des Antriebsmotors (126) im Störfall ausrückt.

14. Vorrichtung nach Anspruch 12 oder 13, dadurch gekennzeichnet, daß der Anschlag (105) von einem mit der Drosselklappenwelle (101) drehfest verbundenen Scheibensegment (104) axial absteht und daß der Gegenanschlag (109) auf einer Mitnehmerplatte (108) angeordnet ist, die drehfest mit einer gehäuseseitig gelagerten Mitnehmerwelle (107) verbunden ist, die vorzugsweise mit der Drosselklappenwelle (101) fluchtet.

15. Vorrichtung nach Anspruch 12 oder 13, dadurch gekennzeichnet, daß der Anschlag (105′) von einer mit der Drosselwellenklappe (101′) drehfest verbundenen Scheibe (104′) axial absteht und daß der Gegenanschlag (109′) von einem Bügel (144′) gebildet ist, der drehfest mit einer gehäuseseitig gelagerter Mitnehmerwelle (107′) verbunden ist, die drehfest eine Mitnehmerplatte (108′) trägt und vorzugsweise mit der Drosselklappenwelle (101′) fluchtet.

16. Vorrichtung nach Anspruch 14 oder 15, dadurch gekennzeichnet, daß die Mitnehmerplatte (108′) mit dem Fahrhebel durch einen Bowdenzug (137′) verbunden ist, der über einen beweglichen Anschlagbolzen (139′) in Zugrichtung an der Mitnehmerplatte (108′) tangential angreift und in einer Führung (138′) an der Mitnehmerplatte (108′) geführt ist.

17. Vorrichtung nach Anspruch 14 oder 15, dadurch gekennzeichnet, daß an der Mitnehmerplatte (108) eine Kurbelstange (116) angelenkt ist, die mit einem Schwenkhebel (117) mit feststehender Schwenkachse (119) und zur Schwenkachse (119) konzentrischer, kreisbogenförmiger Kulisse (120) gelenkig verbunden ist, und daß ein in der Kulisse (120) geführter Kulissenstein (121) auf einem um die Schwenkachse (119) des Schwenkhebels (117) schwenkbaren Hebel (122) angeordnet ist, der an einer zum Fahrhebel führenden Koppelstange (123) angelenkt ist.

18. Vorrichtung nach einem der Ansprüche 12 - 17, dadurch gekennzeichnet, daß die Leerlauffeder (113) als Drehfeder ausgebildet ist, die sich einerseits an einem Gehäuseteil und andererseits an dem Anschlag (105) oder einem mit diesem starr verbundenen Teil (104) abstützt.

19. Vorrichtung nach einem der Ansprüche 12 - 17, dadurch gekennzeichnet, daß die Leerlauffeder (113′) als Zugfeder ausgebildet ist, die einerseits an dem Gegenanschlag (109) oder einem mit diesem drehfest verbundenen Teil (144′) und andererseits an dem Anschlag (105′) oder einem mit diesen drehfest verbundenen Teil (104′) angreift.

20. Vorrichtung nach einem der Ansprüche 12 - 19, dadurch gekennzeichnet, daß der elektrische Sollwertgeber (132;132′) mit dem Gegenanschlag (109;109′) drehfest verbunden ist.

21. Vorrichtung nach Anspruch 20, dadurch gekennzeichnet, daß der Sollwertgeber (132) als Drehwinkelpotentiometer ausgebildet ist, dessen elektrische Schleifbahn (133) auf der Mitnehmerplatte (108) konzentrisch zur Mitnehmerwelle (107) angeordnet ist, und dessen die Schleifbahn (133) kontaktierender Schleifer (134) an einem Gehäuseteil angeordnet ist.

22. Vorrichtung nach Anspruch 20, dadurch gekennzeichnet, daß der Sollwertgeber (132′) als Drehwinkelpotentiometer ausgebildet ist, dessen elektrische Schleifbahn (133′) auf einem gehäusefesten Isolierstoffträger (140′) angeordnet und dessen die Schleifbahn (133′) kontaktierender Schleifer (134′) mit der Mitnehmerwelle (107′) drehfest verbunden ist.

23. Vorrichtung nach einem der Ansprüche 12 - 22, dadurch gekennzeichnet, daß ein die Momentanschwenkstellungen der Drosselklappe (102′) als elektrische Istwertsignale ausgebender Istwertgeber (141′) vorgesehen ist, der als Drehwinkelpotentiometer ausgebildet ist, dessen einer Kontakt, z.B. Schleifer (143′), mit der Drosselklappenwelle (101′) drehfest verbunden ist und dessen anderer Kontakt, z.B. Schleifbahn (142′),gehäusefest angeordnet ist.

24. Vorrichtung nach Anspruch 22 und 23, dadurch gekennzeichnet, daß die Schleifbahn (142′) des Istwertgebers (141′) auf dem Isolierstoffträger (140′) konzentrisch zu der Schleifbahn (133′) des Sollwertgebers (132′) angeordnet ist und daß der Isolierstoffkörper (140′) eine der miteinander fluchtenden Wellen (Drosselklappenwelle 101′, Mitnehmerwelle 107′) mit zu den Achsen der Wellen (101′,107′) konzentrischen Schleifbahnen (133′,142′) umgibt.

25. Vorrichtung nach einem der Ansprüche 12 - 24, dadurch gekennzeichnet, daß dem Anschlag (105;105′) und/oder dem Gegenanschlag (109;109′) ein dessen in Schließrichtung gerichtete Verstellbewegung begrenzender justierbarer Festanschlag (115,114;115′,114′) zugeordnet ist.

26. Vorrichtung nach Anspruch 25, dadurch gekennzeichnet, daß der Festanschlag (114;114′) für den Gegenanschlag (109) derart angeordnet ist, daß beim Anliegen des Gegenanschlags (109;109′) an dem Festanschlag (114;114′) und bei Anliegen des Anschlags (105;105′) an dem Gegenanschlag (109;109′) die Drosselklappe (102;102′) eine gehobene Leerlaufstellung einnimmt.

27. Vorrichtung nach Anspruch 25 oder 26, dadurch gekennzeichnet, daß der dem Anschlag (105;105′) zugeordnete Festanschlag (115;115′) derart angeordnet ist, daß bei Anliegen des Anschlags (105;105′) an dem Festanschlag (115;115′) die Drosselklappe (102;102′) ihre Schließstellung einnimmt.

28. Vorrichtung nach einem der Ansprüche 12 - 26, dadurch gekennzeichnet, daß der Antriebsmotor (126) von dem Steuergerät derart gesteuert wird, daß im ungestörten Betrieb bei schlupflosen Antriebsrädern (20) die Drosselklappe (102;102′) in Abhängigkeit von den elektrischen Sollwertsignalen immer so nachgeführt wird, daß der Anschlag (105;105′) nicht zur Anlage an dem Gegenanschlag (109;109′) kommt.

29. Vorrichtung nach einem der Ansprüche 12 - 28, dadurch gekennzeichnet, daß bei Einschalten eines sog. Tempomats das Steuergerät den Antriebsmotor (126) derart steuert, daß er über die Drosselklappenwelle (101;101′) und den Anschlag (105;105′) den Gegenanschlag (109;109′) gegen die Federkraft der Rückstellfeder (112;112′) bewegt.

21 499 IP

FIG.1

FIG.2

21 499 I

FIG.3

FIG.4

Fig. 5

EP 0 315 794 A2

214991P

21 499 IF

Fig. 6

Fig. 7

108'  137'  112'

107'

140'

142'

143'

141'

113'

136'

101'

132'

133'

134'

109'

105'

144'

104'

Fig.8

Fig. 9

EP 0 315 794 A2

214991P